# FASCICULE DE BREVET EUROPEEN

(11) **EP 2 845 253 B1**
(45) Date de publication et mention de la délivrance du brevet: **22.03.2017**
(21) Numéro de dépôt: 13720392.3
(22) Date de dépôt: 03.05.2013
(51) Int. Cl.: H01M 8/2465, H01M 8/2475, H01M 8/2485, H01M 8/00

(54) **DISPOSITIF DE RACCORDEMENT DE PILE A COMBUSTIBLE ET PILE A COMBUSTIBLE EQUIPEE D'UN TEL DISPOSITIF**
VERBINDUNGSVORRICHTUNG FÜR EINE BRENNSTOFFZELLE UND BRENNSTOFFZELLE MIT SOLCH EINER VORRICHTUNG
CONNECTING DEVICE FOR A FUEL CELL AND FUEL CELL FITTED WITH SUCH A DEVICE

(30) Priorité: 03.05.2012 FR 1254056
(43) Date de publication de la demande: 11.03.2015
(73) Titulaire: Pragma Industries, 64210 Bidart (FR)
(72) Inventeur: ABADIE, Mario, F-64600 Anglet (FR)
(74) Mandataire: Ipside
(86) Numéro de dépôt international: PCT/EP2013/059221
(87) Numéro de publication internationale: WO 2013/164438

(56) Documents cités:
- FR-A1- 2 958 800

## Description

La présente invention concerne un dispositif de raccordement de pile à combustible et une pile à combustible équipée d'un tel dispositif.

L'invention s'applique en particulier à une pile à combustible comportant une bande porteuse d'une pluralité de cellules unitaires raccordées entre elles enroulée.

Des piles à combustible comportant une bande porteuse de cellules unitaires enroulée sont notamment décrites dans le document FR 2 880 994 A1 et FR 2 958 800 A1 au nom de la demanderesse.

Pour le raccordement d'une telle pile il y a lieu de considérer le raccordement électrique des électrodes des cellules terminales de la bande, les cellules en série étant raccordées entre elles au sein de la bande, et le raccordement fluidique permettant notamment de faire circuler l'hydrogène alimentant la face anodique des cellules.

Il est possible de dissocier le raccordement électrique et le raccordement fluidique toutefois cette solution ne permet pas de conserver la compacité de la pile et notamment de la pile enroulée.

La présente invention propose dans ce contexte un dispositif de raccordement compact et combinant la partie de raccordement fluidique pour la circulation d'hydrogène et la partie de raccordement électrique.

Pour ce faire, la présente invention propose un dispositif de raccordement de pile à combustible à bande porteuse de cellules et enroulée en spirale, qui comprend un tube, pourvu d'une surface externe conductrice de l'électricité et d'une terminaison axiale de raccordement électrique, ledit tube étant pourvu en outre d'une terminaison de raccordement d'un premier gaz et de lumières radiales de passage dudit premier gaz, le tube formant un canal de distribution du premier gaz entre la terminaison de raccordement du premier gaz et les lumières radiales, le dispositif comprenant en outre un manchon isolant électrique de réception du tube, le manchon étant muni d'une fenêtre longitudinale ouverte en regard des lumières sur un côté du manchon.

Avantageusement, la terminaison de raccordement du premier gaz est une terminaison axiale du tube entourée par la terminaison axiale de raccordement électrique.

Le dispositif peut notamment comprendre un embout de connexion externe raccordé au tube faisant office de connecteur électrique et fluidique inséré dans le manchon et dépassant du manchon.

Selon un premier mode de réalisation, le dispositif constitue un dispositif de raccordement central de la pile et comporte un capot formant avec le manchon un mandrin d'enroulement de la pile.

Selon un second mode de réalisation, le dispositif constitue un dispositif de raccordement périphérique de la pile et comporte un capot formant avec le manchon un élément de terminaison de la bande porteuse.

L'invention concerne en outre une pile à combustible à bande porteuse de cellules enroulée en spirale pour laquelle les cellules disposées sur la bande porteuse sont reliées en série par des bandelettes formant couches de diffusion gazeuse et liaisons électriques entre des anodes et des cathodes des cellules successives, la bande porteuse étant recouverte d'une couverture pourvue de canaux longitudinaux de passage du premier gaz et comportant au moins un dispositif de raccordement selon l'invention, pour laquelle le tube dudit au moins un dispositif de raccordement est relié électriquement à une extrémité d'une bandelette terminale et pour laquelle les lumières sont mises en communication avec les canaux longitudinaux au travers de la fenêtre du manchon.

Selon un premier mode de réalisation de la pile, l'extrémité de la bandelette terminale s'insère entre le tube et le manchon, le manchon appliquant l'extrémité de la bandelette sur le tube pour réaliser une continuité électrique entre le tube et la bandelette.

Avantageusement, le dispositif de raccordement comprend en outre un capot s'appliquant sur le manchon et emprisonnant, entre le manchon et le capot, une extrémité de la bande porteuse dépassant de l'extrémité de la couverture.

Le capot peut en particulier recouvrir la fenêtre et maintenir la couverture en appui sur le manchon, les canaux longitudinaux étant ainsi maintenus en regard de la fenêtre et en communication avec les lumières du tube.

Plus particulièrement le dispositif est avantageusement central à la spirale et la spirale s'enroule autour du manchon et du capot conformés en mandrin.

Selon un second mode de réalisation de la pile, le manchon comporte une découpe longitudinale sur un côté du manchon opposé au côté portant la fenêtre, ladite découpe laissant dépasser une partie de la face externe du tube réalisant une surface de connexion électrique entre le tube et la bandelette terminale.

Dans ce cadre, le manchon s'applique avantageusement sur la bande porteuse munie d'au moins une découpe de mise en communication des canaux de la couverture avec la fenêtre du manchon.

Avantageusement, le dispositif de raccordement de ce second mode de réalisation comprend en outre un capot s'appliquant sur le manchon et emprisonnant, entre le manchon et le capot, ladite bandelette terminale et appliquant ladite bandelette terminale contre la surface de connexion.

Le capot peut notamment être conformé en guide d'enroulement d'une spire externe terminale de la couverture.

Avantageusement, le capot et le manchon comportent des formes complémentaires d'encliquetage, et comportent une face inférieure concave s'appliquant sur l'extérieur de l'enroulement de la pile.

La pile peut notamment comprendre une enroulement d'un feuillard à cannelures transversales formant passages d'un second gaz perpendiculairement à l'enroulement de la pile, ledit enroulement s'arrêtant sous le capot et contre le manchon.

Le second gaz est avantageusement de l'air se chargeant de vapeur d'eau au niveau des cellules.

Le premier gaz est avantageusement l'hydrogène réactif de la pile.

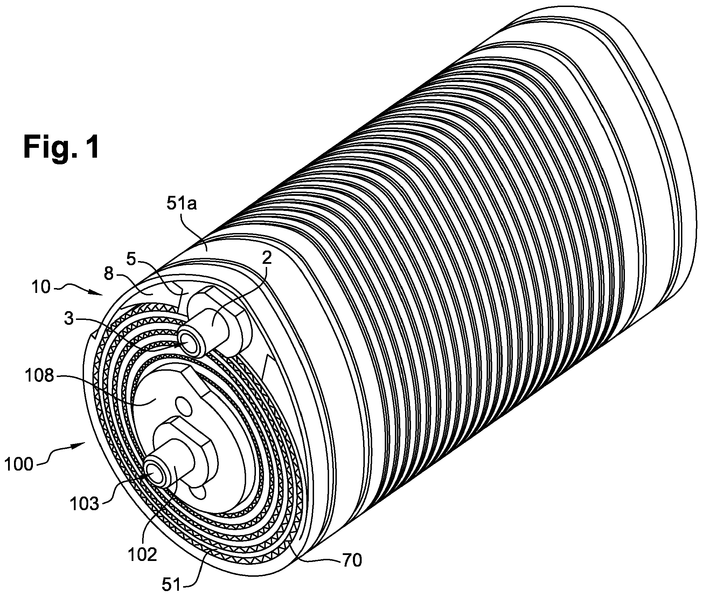

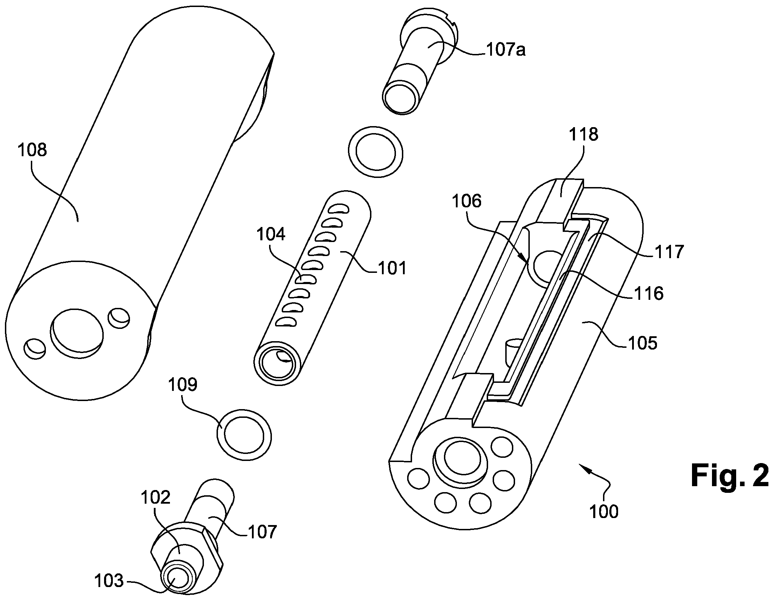

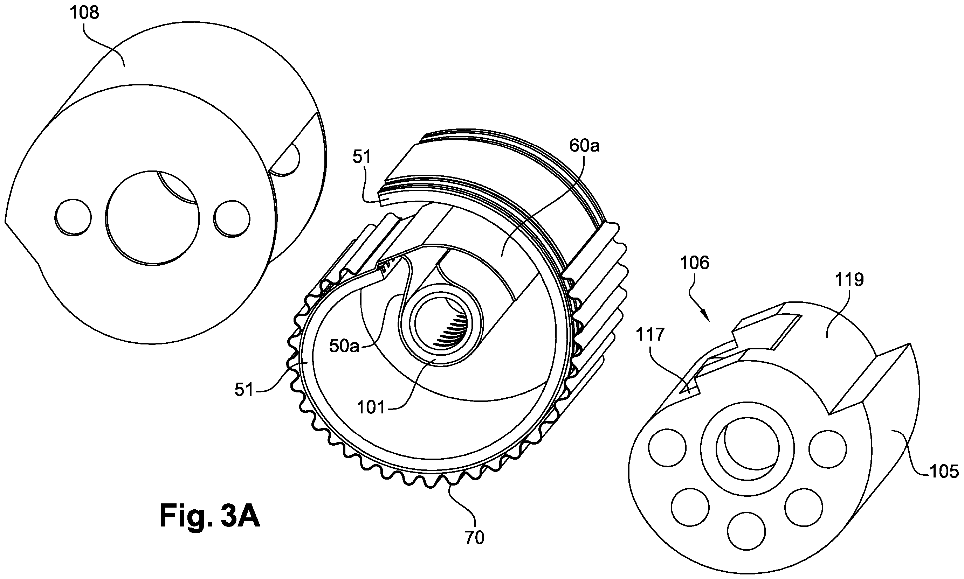

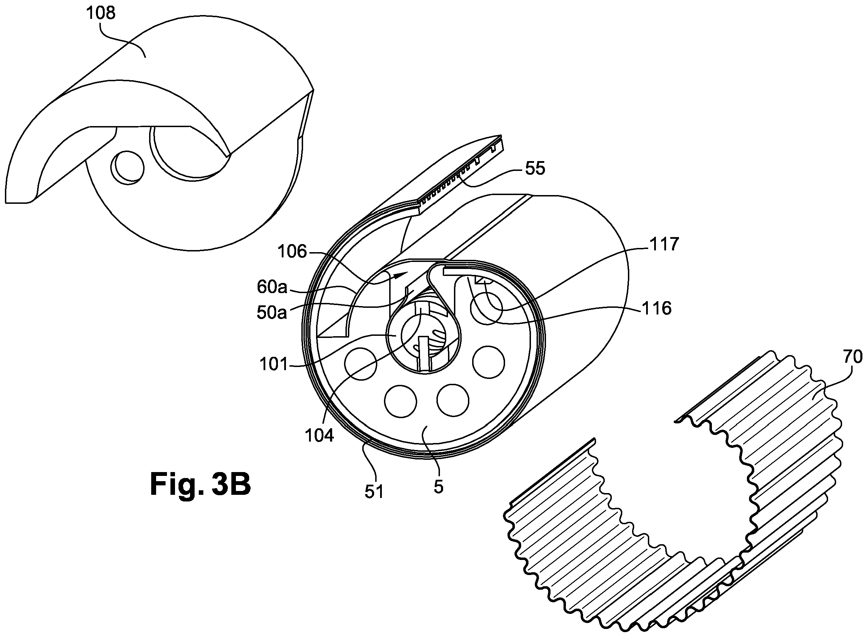

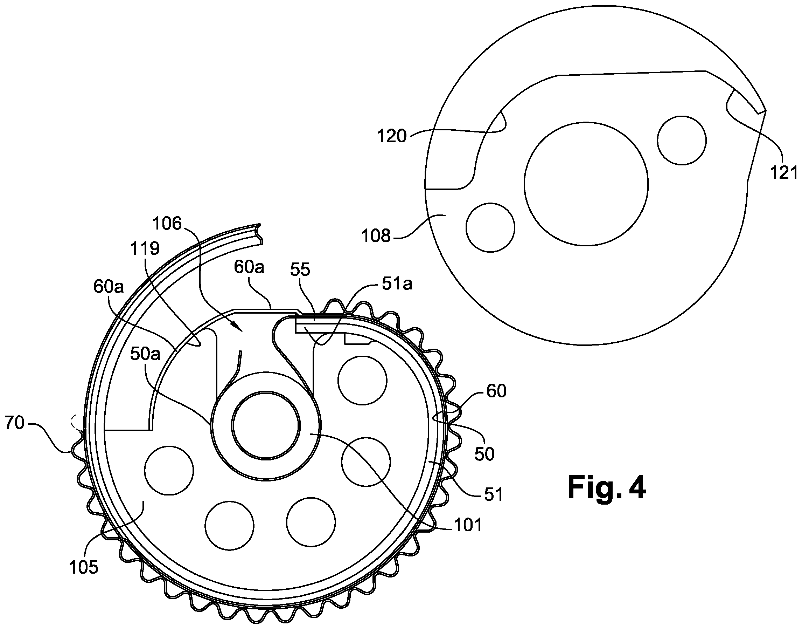

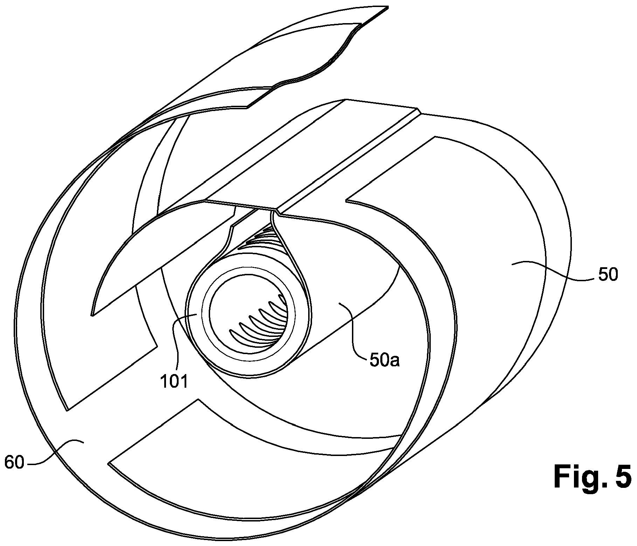

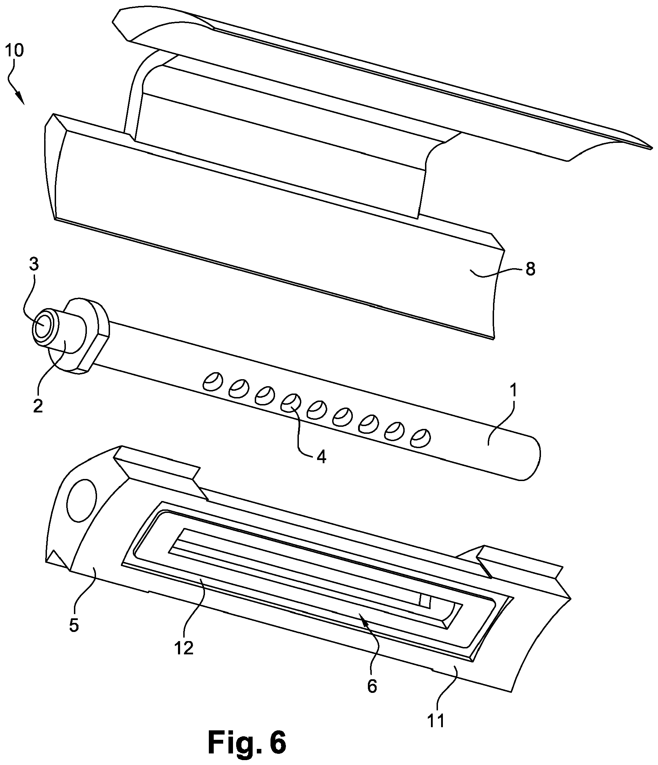

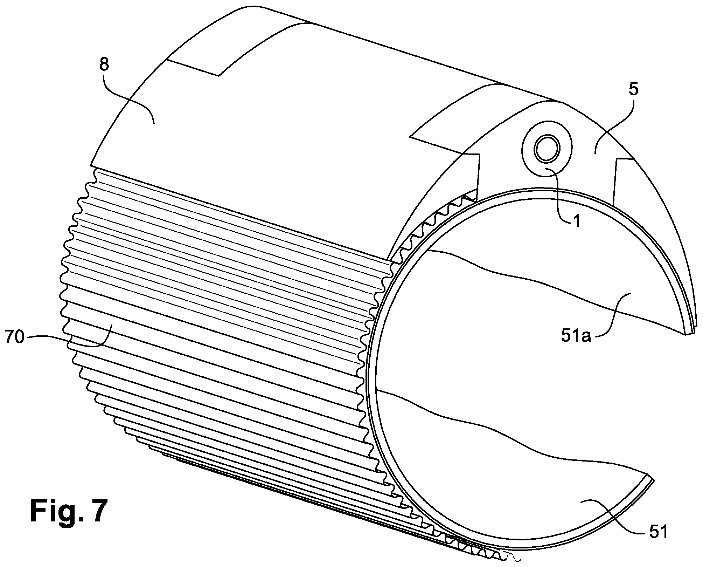

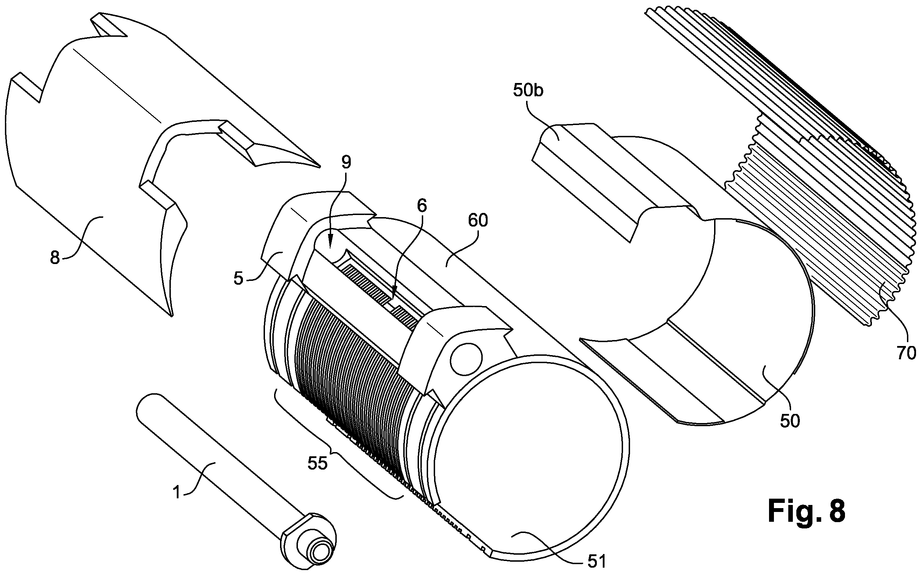

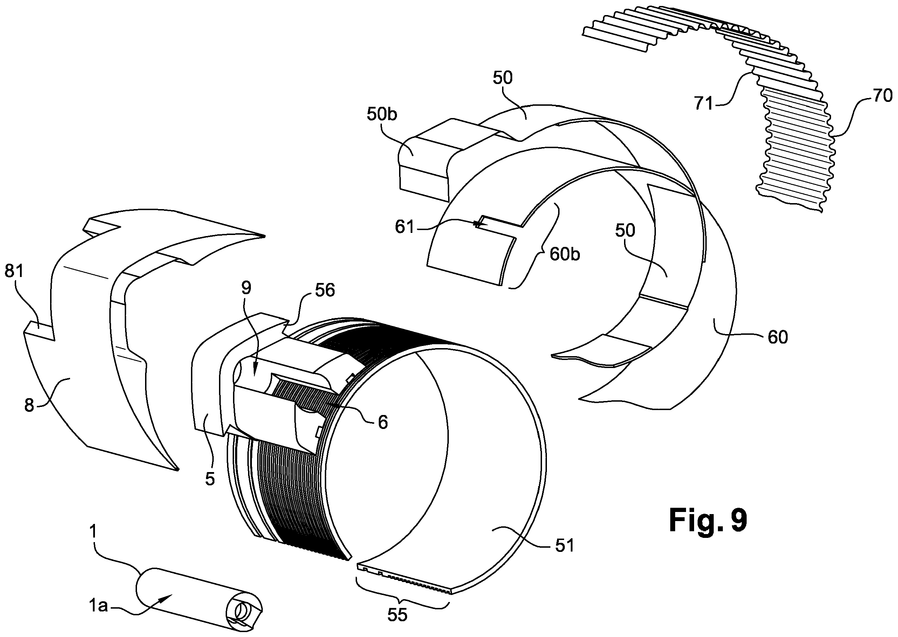

D'autres caractéristiques et avantages de l'invention seront apparents à la lecture de la description qui suit d'un exemple de réalisation non limitatif de l'invention en référence aux dessins qui représentent
en figure 1: une vue en perspective d'une pile à combustible enroulée en spirale pourvue de dispositifs de raccordement de l'invention,
en figure 2: une vue en éclaté d'un dispositif de raccordement de l'invention selon un premier mode de réalisation de l'invention;
en figure 3A: une vue en éclaté du dispositif de la figure 1 partiellement raccordé sur la pile;
en figure 3B: une vue en éclaté coupe du dispositif de la figure 3A en miroir;
en figure 4: une vue en coupe de face du dispositif de la figure 3A;
en figure 5: une vue en perspective du raccordement d'un tube du dispositif de la figure 3A sur une bande porteuse de cellules de la pile;
en figure 6: une vue en éclaté d'un dispositif de raccordement de l'invention selon un second mode de réalisation de l'invention;
en figure 7: Une vue en perspective du dispositif de la figure 6 positionné sur la pile;
en figure 8: une vue en éclaté du raccordement du dispositif de la figure 7 partiellement démonté;
en figure 9: une vue en éclaté coupe du raccordement de la figure 8 selon une seconde étape de démontage.

La présente invention concerne un dispositif de raccordement de pile à combustible de type enroulée en spirale comportant une bande porteuse de cellules électrochimiques unitaires reliées en série dont un exemple est donné en figure 1.

Pour son raccordement la pile comporte deux dispositifs de connexion, l'un central 100 et l'autre externe 10 disposé en périphérie de la pile.

Ces dispositifs de raccordement comportent des douilles de connexion 2, 102 et des orifices d'entrée sortie de gaz 3, 103 faisant circuler de l'hydrogène dans la pile.

La pile selon l'exemple comporte, outre la bande porteuse des cellules unitaires, une couverture 51 souple, par exemple réalisée dans un matériau élastomère moulé, pourvue de canaux de distribution du gaz vers les cellules et comporte un feuillard ondulé 70 permettant la circulation d'air de refroidissement de la pile et l'évacuation de la vapeur d'eau générée par la réaction électrochimique de la pile.

Pour le fonctionnement et l'architecture de la pile on se reporte au documents FR 2 880 994 A1 et FR 2 958 800 A1 précités. On rappelle toutefois que la pile comporte une bande porteuse de cellules unitaires qui ont leurs cathodes sur une face de la bande porteuse et leurs anodes sur l'autre face de la bande porteuse, la cathode d'une cellule n étant reliée à l'anode d'une cellule n+1 par une bandelette conductrice traversant la bande porteuse entre la cellule n et la cellule n+1, une circulation d'hydrogène côté anodes et une circulation d'air côté cathodes étant réalisée pour faire fonctionner la pile.

Comme il sera vu plus en détail ci-dessous, le dispositif de raccordement central 100 comporte un capot 108 et le dispositif de raccordement externe comporte un capot 8, le capot 108 du dispositif de raccordement central aidant à l'enroulement du début de la spirale et le capot 8 du dispositif de raccordement externe permettant de terminer l'enroulement de la spirale (le début de la spirale étant défini comme étant au centre de la spirale).

Selon les figures 2 et 6 le dispositif de raccordement de l'invention comprend deux pièces principales à savoir un tube 1, 101 et un manchon 5, 105 recevant le tube.

Le tube est pourvu d'une surface externe conductrice de l'électricité et d'une terminaison axiale 2, 102 de raccordement électrique.

Le tube peut notamment être réalisé en cuivre bon conducteur de l'électricité.

Le tube est en outre pourvu en outre d'une terminaison 3, 103 de raccordement d'un premier gaz et de lumières radiales 4, 104 de passage dudit premier gaz, le tube formant un canal de distribution du premier gaz entre la terminaison de raccordement et les lumières radiales.

Les lumières radiales sont ici de trous de section circulaire répartis le long du tube et communiquant avec l'intérieur du tube mais peuvent de manière équivalente être remplacées par une ou plusieurs lumières oblongues ou rectangulaires.

Le manchon 5, 105 est un manchon isolant électrique qui est muni d'une fenêtre longitudinale 6, 106 ouverte en regard des lumières sur un côté du manchon.

La terminaison 3, 103 de raccordement du premier gaz est une terminaison axiale du tube entourée par la terminaison axiale de raccordement électrique 2, 102.

Selon l'exemple de la figure 2, pour laquelle le dispositif de raccordement est un dispositif de raccordement interne central de la pile commençant l'enroulement de la pile, le dispositif comprend un embout 107 de connexion externe raccordé au tube faisant office de connecteur électrique et fluidique inséré dans le manchon 105 et dépassant du manchon.

Selon l'exemple représenté, un joint torique 109 rend étanche l'assemblage de l'embout 107 sur le manchon 105.

Le joint torique peut toutefois être remplacé par un joint colle, un surmoulage ou un joint directement réalisé par injection bi-matière

Le but de ce joint est de contrôler la canalisation du gaz entre la manche formée de la bande porteuse de cellules et la bande cannelée pour l'hydrogène et de diriger le gaz vers un raccord d'alimentation.

La fenêtre 106 est une fenêtre rectangulaire, un des longs côtés d'encadrement de la fenêtre comportant une face d'appui 116 et une gorge 117, les petits côtés de l'encadrement de la fenêtre comportant des épaulements 118.

Selon l'exemple de la figure 6 pour lequel le dispositif de raccordement est un dispositif de raccordement externe terminant la spirale de la pile, la connexion externe 2 fait partie du tube, le manchon 5 étant ici préférablement un manchon surmoulé sur le tube 1 bien qu'un manchon rapporté puisse aussi être utilisé.

La fenêtre 6 est, pour ce mode de réalisation, encadrée par une surface d'appui 11 périphérique pourvue d'une gorge 12.

La connexion de la pile au dispositif de raccordement 100, dispositif de raccordement central de la pile au centre de la spirale formée par la pile, est détaillé figures 3 à 5.

Selon la figure 3B représentant en coupe l'assemblage de l'enroulement de la pile sur le manchon 5, la couverture 51 est montrée en position d'appui sur la face d'appui 116, la face d'appui et la gorge 117 étant adaptées à réaliser un collage de la couverture sur le manchon et à disposer un joint d'étanchéité dans la gorge 117 pour réaliser une liaison étanche entre l'extrémité de la couverture élastomère et le manchon.

Il est à noter que le manchon 5 peut aussi être surmoulé sur le bande , la gorge 117 n'étant dans ce cas pas nécessaire.

La couverture est arrêtée par les épaulements 118 et son extrémité est en porte à faux dans la fenêtre au dessus du logement du tube pour mettre les canaux 55 réalisés dans la couverture en communication avec les lumières du tube débouchant dans le logement sous la fenêtre 106.

La figure 4 vue en coupe représente l'extrémité 51a de la couverture 51 positionnée dans la fenêtre 106.

Sur cette figure est représentée l'extrémité 50a d'une première bandelette 50 reliant la première cellule unitaire de la pile au tube 101 (on définit la première cellule comme celle au plus proche du centra de l'enroulement et la dernière comme celle terminant la pile en périphérie de l'enroulement).

Cette extrémité de première bandelette 50a est enroulée autour du tube et maintenue en contact avec le tube par le manchon 105 dans lequel est logé le tube.

La figure 5 représente le tube 101 sur lequel est enroulé l'extrémité de la bandelette 50a et le début de la bande 60 porteuse des cellules de conversion électrochimique.

Sur la figure 4 ont été retirés le manchon, la couverture et le feuillard pour mieux visualiser l'enroulement.

La figure 3A représente le début de la pile avec cette fois le début de la couverture 51, qui se situe sous la bande porteuse 60 et la bandelette 50 dont les extrémités 60a et 50a sont représentées, et le début du feuillard ondulé 70.

Sur cette figure, le manchon 105 et le capot 108 sont écartés en sorte de représenter une face courbe 119 du manchon 105 sur laquelle vient s'appliquer la terminaison 60a de la bande porteuse.

La position de la terminaison 60a sur le manchon est représentée en outre en figure 4 ou l'on remarque aussi une contreforme 120 réalisée sous le capot 108, cette contreforme s'appliquant sur la terminaison 60a retenue entre la face courbe 119 du manchon et la contreforme 120.

Cette figure permet de distinguer en outre la position du début du feuillard 70 qui est maintenu par un bec 121 du capot.

Pour connecter le dispositif de raccordement sur l'extrémité de la pile,
- la couverture et le feuillard sont coupés pour laisser dépasser l'extrémité de la bande porteuse 60a et l'extrémité 50a de la bandelette,
- la couverture est collée avec un joint d'étanchéité sur la surface d'appui 116, la gorge 117 formant un réserve pour le joint;
- l'extrémité de la bandelette 50a est glissée entre le tube et le manchon;
- l'extrémité 60a de la bande porteuse est positionnée sur la face courbe 119 du côté de la fenêtre opposé à la face d'appui recevant la couverture et,
- le capot 108 est appliqué sur l'ensemble pour refermer la fenêtre et maintenir les éléments de la pile en place.

L'ensemble est alors fixé par l'insertion des embouts 107 et 107a de la figure 2 qui bloquent le capot en position sur le manchon.

Le capot et le manchon servent alors de mandrin pour débuter l'enroulement de la pile, le dispositif de raccordement constituant ainsi un dispositif de raccordement central 10 de la pile et qui comporte un capot 108 formant avec le manchon 105 un mandrin d'enroulement de la pile.

Il est à noter que selon la figure 3B notamment, l'extrémité de bandelette 50a s'interpose entre les lumières 104 et les canaux 55 (masqués par la perspective) dans le logement sous la fenêtre 106.

Ce n'est pas un problème pour la circulation d'hydrogène car la bandelette est un matériau poreux laissant passer les gaz.

En outre, il est concevable d'enrouler la bandelette sur le tube dans le sens opposé du sens représenté sur les figures.

Le raccordement du dispositif de la figure 6 est détaillé aux figures 7 à 9.

Selon la figure 7, ce dispositif constitue un dispositif de raccordement périphérique 10 de la pile, c'est à dire un dispositif de raccordement terminant la pile en périphérie de la pile. Il comporte un capot 8 formant avec le manchon 5 un élément de terminaison de la bande porteuse qui s'applique sur la fin de l'ensemble bande porteuse 60, couverture 51 et feuillard 70.

Une partie inférieure du capot et du manchon épouse la courbure de l'enroulement terminal de la pile alors que comme représenté en figure 1, les parties supérieures du capot et du manchon sont réalisés avec une courbure adaptée à permettre de recouvrir la pile par un brin supplémentaire 51a de la couverture 51 pour protéger la pile.

Sur la figure 8 le capot 8, le feuillard 70, la bandelette 50 et le tube 1 ont été écartés pour permettre de visualiser le positionnement du manchon 5.

Côté opposé à la fenêtre 6, le manchon 5 comprend une découpe 9 au travers de laquelle dépasse un côté du tube 1.

Pour réaliser la connexion électrique entre le tube 1 et la terminaison 50b de la bandelette 50, cette terminaison est posée sur la partie supérieure du manchon 5 et vient se connecter sur le côté du tube 1 affleurant ou dépassant de la découpe 9.

Le contact électrique est assuré par le capot 8 qui, une fois encliqueté ou assemblé avec le manchon 5, appuie sur la terminaison de la bandelette et la presse contre le tube.

Pour le raccordement gazeux, les lumières du tube (ici non visibles car tournées vers le bas) sont disposées en face de la fenêtre 6 elle même au dessus des canaux 55 de la couverture 51.

Selon la figure 8, la fin de la bande porteuse est disposée sous le manchon 5 en sorte de former une surface plane permettant de réaliser un raccordement étanche par la disposition d'un joint au niveau de la surface d'appui 11 et de la gorge 12 représentées en figure 6 où le manchon est vu de dessous.

Pour assurer la communication du gaz entre les lumières du tube 1 et les canaux 55, la bande porteuse comporte une découpe 61 de mise en communication des canaux 55 de la couverture élastomère 51 avec la fenêtre 6 du manchon. Cette découpe est représentée en figure 9 où la bande porteuse a été écartée du manchon.

Ainsi la connexion de la fin de l'enroulement de la pile est réalisée comme suit:
- on termine la bande porteuse 60 par un segment 60b de la largeur du manchon 5 et pourvu de la découpe 61,
- on coupe le feuillard pour qu'il s'arrête sur un bord extérieur du manchon 5;
- on conserve une longueur de couverture adaptée à réaliser environ un tour et demi supplémentaire par rapport à la fin de bande porteuse;
- on courbe la terminaison 50b de la dernière bandelette de la pile;
- on colle de manière étanche le manchon sur le segment 60b, la découpe 61 étant disposée au sous la fenêtre 6 pour laisser apparent les canaux 55 de la couverture 51 ;
- on positionne la terminaison 50b sur le manchon et on encliquette le capot 8 sur le manchon 5.

Enfin, on entoure le dispositif de raccordement et le capot par la longueur de couverture supplémentaire et on la colle sur l'enroulement précédent ou on la fixe avec un dispositif adhésif ou un collier.

Le feuillard cannelé 70 se retrouve coincé sous le capot 8 et en butée contre le manchon 5 comme représenté à la figure 7.

Pour fixer le manchon 5 et le capot 8, le capot 8 et le manchon 5 comportent des formes complémentaires d'encliquetage 81, 56.

La face inférieure concave du manchon et la face inférieure du capot s'appliquent sur l'extérieur de l'enroulement de la pile, le connecteur extérieur pouvant en outre être réalisé dans un matériaux élastomère souple pour s'adapter à la forme de différents enroulements.

La couverture 51 peut notamment être réalisée en matériau élastomère de dureté suffisante pour la réalisation des cloisons de canaux et de souplesse permettant son enroulement.

Le feuillard est pour sa part réalisé dans un matériau tel qu'un matériau plastique adapté à conserver sa forme une fois ondulé et enroulé dans la pile.

L'invention ne se limite pas à l'exemple représenté, les terminaisons de raccordement électriques pouvant notamment comporter des cosses ou moyens d'appui d'une cosse électrique.

## Revendications

1. Dispositif de raccordement de pile à combustible à bande (60) porteuse de cellules et enroulée en spirale, **caractérisé en ce qu'**il comprend un tube (1, 101), pourvu d'une surface externe conductrice de l'électricité et d'une terminaison axiale (2, 102) de raccordement électrique, ledit tube étant pourvu en outre d'une terminaison (3, 103) de raccordement d'un premier gaz et de lumières radiales (4, 104) de passage dudit premier gaz, le tube formant un canal de distribution du premier gaz entre la terminaison de raccordement du premier gaz et les lumières radiales, le dispositif comprenant en outre un manchon isolant électrique (5, 105) de réception du tube, le manchon étant muni d'une fenêtre longitudinale (6, 106) ouverte en regard des lumières sur un côté du manchon.

2. Dispositif de raccordement de pile à combustible selon la revendication 1 **caractérisé en ce que** la terminaison (3, 103) de raccordement du premier gaz est une terminaison axiale du tube entourée par la terminaison axiale de raccordement électrique (2, 102).

3. Dispositif de raccordement de pile à combustible selon la revendication 1 ou 2 **caractérisé en ce qu'**il comprend un embout (107) de connexion externe raccordé au tube faisant office de connecteur électrique et fluidique inséré dans le manchon (5, 105) et dépassant du manchon.

4. Dispositif de raccordement selon la revendication 3 **caractérisé en ce qu'**il constitue un dispositif de raccordement central (110) de la pile et comporte un capot (108) formant avec le manchon (105) un mandrin d'enroulement de la pile.

5. Dispositif de raccordement selon la revendication 3 **caractérisé en ce qu'**il constitue un dispositif de raccordement périphérique (10) de la pile et comporte un capot (8) formant avec le manchon (5) un élément de terminaison de la bande porteuse.

6. Pile à combustible à bande porteuse de cellules enroulée en spirale pour laquelle les cellules disposées sur la bande porteuse sont reliées en série par des bandelettes (50) formant couches de diffusion gazeuse et liaisons électriques entre des anodes et des cathodes des cellules successives, la bande porteuse étant recouverte d'une couverture (51) pourvue de canaux longitudinaux (55) de passage du premier gaz et comportant au moins un dispositif de raccordement selon la revendication 1, 2 ou 3, **caractérisée en ce que** le tube (1, 101) dudit au moins un dispositif de raccordement est relié électriquement à une extrémité (50a, 50b) d'une bandelette terminale et **en ce que** les lumières (4, 104) sont mises en communication avec les canaux longitudinaux au travers de la fenêtre (6, 106) du manchon (5, 105).

7. Pile à combustible à bande porteuse de cellules enroulée en spirale selon la revendication 6 **caractérisée en ce que** l'extrémité (50a) de la bandelette terminale s'insère entre le tube (101) et le manchon (105), le manchon appliquant l'extrémité de la bandelette sur le tube pour réaliser une continuité électrique entre le tube et la bandelette.

8. Pile à combustible à bande porteuse de cellules enroulée en spirale selon la revendication 7 **caractérisée en ce que** le dispositif de raccordement comprend en outre un capot (108) s'appliquant sur le manchon (105) et emprisonnant, entre le manchon et le capot, une extrémité (60a) de la bande porteuse (60) dépassant de l'extrémité de la couverture (51).

9. Pile à combustible à bande porteuse de cellules enroulée en spirale selon la revendication 8 **caractérisée en ce que** le capot (108) recouvre la fenêtre (106) et maintient la couverture (51) en appui sur le manchon, les canaux longitudinaux (55) étant ainsi maintenus en regard de la fenêtre et en communication avec les lumières du tube.

10. Pile à combustible à bande porteuse de cellules enroulée en spirale selon la revendication 9 **caractérisée en ce que** ledit dispositif est un dispositif (100) central à la spirale pour lequel la spirale s'enroule autour du manchon (105) et du capot (108) conformés en mandrin.

11. Pile à combustible à bande porteuse de cellules enroulée en spirale selon la revendication 6 **caractérisée en ce que** le manchon (5) comporte une découpe longitudinale (9) sur un côté du manchon opposé au côté portant la fenêtre, ladite découpe laissant dépasser une partie de la face externe du tube (1) réalisant une surface de connexion électrique (1 a) entre le tube et la bandelette terminale (50b).

12. Pile à combustible à bande porteuse de cellules enroulée en spirale selon la revendication 11 **caractérisée en ce que** le manchon s'applique sur la bande porteuse (60) munie d'au moins une découpe (61) de mise en communication des canaux (55) de la couverture (51) avec la fenêtre (6) du manchon.

13. Pile à combustible à bande porteuse de cellules enroulée en spirale selon la revendication 11 ou 12 **caractérisée en ce que** le dispositif de raccordement comprend en outre un capot (8) s'appliquant sur le manchon (5) et emprisonnant, entre le manchon (5) et le capot (8), ladite bandelette terminale (50b) et appliquant ladite bandelette terminale contre la surface de connexion (1 a).

14. Pile à combustible à bande porteuse de cellules enroulée en spirale selon la revendication 13 **caractérisée en ce que** le capot (8) est conformé en guide d'enroulement d'une spire externe terminale (51 a) de la couverture (51).

15. Pile à combustible à bande porteuse de cellules enroulée en spirale selon la revendication 13 ou 14 **caractérisée en ce que** le capot (8) et le manchon (5) comportent des formes complémentaires d'encliquetage (81, 56), et comportent une face inférieure concave s'appliquant sur l'extérieur de l'enroulement de la pile.

16. Pile à combustible à bande porteuse de cellules enroulée en spirale selon l'une quelconque des revendications 8 à 10, 13 ou 14 **caractérisée en ce qu'**elle comprend une enroulement d'un feuillard (70) à cannelures transversales (71) formant passages d'un second gaz perpendiculairement à l'enroulement de la pile, ledit enroulement s'arrêtant sous le capot et contre le manchon.

## Patentansprüche

1. Anschlussvorrichtung einer Brennstoffzelle mit Zellen tragendem und spiralförmig gewickeltem Band (60), **dadurch gekennzeichnet, dass** sie ein Rohr (1, 101) enthält, das mit einer stromleitenden Außenfläche und einer axialen Stromanschluss-Endeinrichtung (2, 102) versehen ist, wobei das Rohr außerdem mit einer Endeinrichtung (3, 103) für den Anschluss eines ersten Gases und mit radialen Löchern (4, 104) für den Durchgang des ersten Gases versehen ist, wobei das Rohr einen Verteilungskanal des ersten Gases zwischen der Anschluss-Endeinrichtung des ersten Gases und den radialen Löchern bildet, wobei die Vorrichtung außerdem eine elektrisch isolierende Muffe (5, 105) zur Aufnahme des Rohrs enthält, wobei die Muffe mit einem Längsfenster (6, 106) versehen ist, das gegenüber den Löchern auf einer Seite der Muffe offen ist.

2. Anschlussvorrichtung einer Brennstoffzelle nach Anspruch 1, **dadurch gekennzeichnet, dass** die Endeinrichtung (3, 103) zum Anschluss des ersten Gases eine axiale Endeinrichtung des Rohrs ist, die von der axialen Stromanschluss-Endeinrichtung (2, 102) umgeben ist.

3. Anschlussvorrichtung einer Brennstoffzelle nach Anspruch 1 oder 2, **dadurch gekennzeichnet, dass** sie ein an das Rohr angeschlossenes Anschlussstück (107) zur externen Verbindung enthält, das als elektrischer und fluidischer Verbinder dient, der in die Muffe (5, 105) eingeführt ist und aus der Muffe vorsteht.

4. Anschlussvorrichtung nach Anspruch 3, **dadurch gekennzeichnet, dass** sie eine zentrale Anschlussvorrichtung (110) der Zelle bildet und eine Abdeckhaube (108) aufweist, die mit der Muffe (105) einen Wickeldorn der Zelle bildet.

5. Anschlussvorrichtung nach Anspruch 3, **dadurch gekennzeichnet, dass** sie eine periphere Anschlussvorrichtung (10) der Zelle bildet und eine Abdeckhaube (8) aufweist, die mit der Muffe (5) ein Endeinrichtungselement des Trägerbands bildet.

6. Brennstoffzelle mit spiralförmig gewickeltem, Zelleneinheiten tragendem Band, bei der die auf dem Trägerband angeordneten Zelleneinheiten durch Bändchen (50) in Reihe verbunden sind, die Gasdiffusionsschichten und elektrische Verbindungen zwischen Anoden und Kathoden der aufeinanderfolgenden Zelleneinheiten bilden, wobei das Trägerband mit einer Abdeckung (51) bedeckt ist, die mit Längskanälen (55) für den Durchgang des ersten Gases versehen sind, und mindestens eine Anschlussvorrichtung nach Anspruch 1, 2 oder 3 aufweist, **dadurch gekennzeichnet, dass** das Rohr (1, 101) der mindestens einen Anschlussvorrichtung elektrisch mit einem Ende (50a, 50b) eines Endbändchens verbunden ist, und dass die Löcher (4, 104) mit den Längskanälen über das Fenster (6, 106) der Muffe (5, 105) in Verbindung gebracht werden.

7. Brennstoffzelle mit spiralförmig gewickeltem, Zelleneinheiten tragendem Band nach Anspruch 6, **dadurch gekennzeichnet, dass** das Ende (50a) des Endbändchens sich zwischen das Rohr (101) und die Muffe (105) einfügt, wobei die Muffe das Ende des Bändchens auf das Rohr auflegt, um eine elektrische Kontinuität zwischen dem Rohr und dem Bändchen herzustellen.

8. Brennstoffzelle mit spiralförmig gewickeltem, Zelleneinheiten tragendem Band nach Anspruch 7, **dadurch gekennzeichnet, dass** die Anschlussvorrichtung außerdem eine Abdeckhaube (108) enthält, die sich auf die Muffe (105) auflegt und zwischen der Muffe und der Abdeckhaube ein Ende (60a) des Trägerbands (60) einschließt, das über das Ende der Abdeckung (51) vorsteht.

9. Brennstoffzelle mit spiralförmig gewickeltem, Zelleneinheiten tragendem Band nach Anspruch 8, **dadurch gekennzeichnet, dass** die Abdeckhaube (108) das Fenster (106) bedeckt und die Abdeckung (51) in Auflage auf der Muffe hält, wobei die Längskanäle (55) so gegenüber dem Fenster und in Verbindung mit den Löchern des Rohrs gehalten werden.

10. Brennstoffzelle mit spiralförmig gewickeltem, Zelleneinheiten tragendem Band nach Anspruch 9, **dadurch gekennzeichnet, dass** die Vorrichtung eine zentrale Vorrichtung (100) in der Spirale ist, bei der die Spirale sich um die Muffe (105) und die Abdeckhaube (108) wickelt, die als Dorn gestaltet sind.

11. Brennstoffzelle mit spiralförmig gewickeltem, Zelleneinheiten tragendem Band nach Anspruch 6, **dadurch gekennzeichnet, dass** die Muffe (5) einen Längsausschnitt (9) auf einer Seite der Muffe entgegengesetzt zur das Fenster tragenden Seite aufweist, wobei der Ausschnitt einen Teil der Außenseite des Rohrs (1) vorstehen lässt, wodurch eine elektrische Verbindungsfläche (1a) zwischen dem Rohr und dem Endbändchen (50b) hergestellt wird.

12. Brennstoffzelle mit spiralförmig gewickeltem, Zelleneinheiten tragendem Band nach Anspruch 11, **dadurch gekennzeichnet, dass** die Muffe sich auf das Trägerband (60) auflegt, das mit mindestens einen Ausschnitt (61) zur Verbindung der Kanäle (55) der Abdeckung (51) mit dem Fenster (6) der Muffe versehen ist.

13. Brennstoffzelle mit spiralförmig gewickeltem, Zelleneinheiten tragendem Band nach Anspruch 11 oder 12, **dadurch gekennzeichnet, dass** die Anschlussvorrichtung außerdem eine Abdeckhaube (8) enthält, die sich auf die Muffe (5) auflegt und zwischen der Muffe (5) und der Abdeckhaube (8) das Endbändchen (50b) einschließt und das Endbändchen gegen die Verbindungsfläche (1a) anlegt.

14. Brennstoffzelle mit spiralförmig gewickeltem, Zelleneinheiten tragendem Band nach Anspruch 13, **dadurch gekennzeichnet, dass** die Abdeckhaube (8) als Wickelführung einer äußeren Endwindung (51a) der Abdeckung (51) gestaltet ist.

15. Brennstoffzelle mit spiralförmig gewickeltem, Zelleneinheiten tragendem Band nach Anspruch 13 oder 14, **dadurch gekennzeichnet, dass** die Abdeckhaube (8) und die Muffe (5) komplementäre Einrastformen (81, 56) aufweisen und eine konkave Innenseite aufweisen, die sich auf die Außenseite der Wicklung der Zelle auflegt.

16. Brennstoffzelle mit spiralförmig gewickeltem, Zelleneinheiten tragendem Band nach einem der Ansprüche 8 bis 10, 13 oder 14, **dadurch gekennzeichnet, dass** sie eine Wicklung eines Blechbands (70) mit Querriefen (71) enthält, die Durchgänge eines zweiten Gases lotrecht zur Wicklung der Zelle bilden, wobei die Wicklung unter der Abdeckhaube und gegen die Muffe aufhört.

## Claims

1. Fuel cell connection device with strip (60) bearing cells and spiral-wound, **characterized in that** it comprises a tube (1, 101), provided with an electricity-conducting outer surface and an axial electrical connection termination (2, 102), said tube being further provided with a connection termination (3, 103) for a first gas and radial openings (4, 104) for the passage of said first gas, the tube forming a distribution channel for the first gas between the connection termination for the first gas and the radial openings, the device further comprising an electrically insulating sleeve tube (5, 105) for receiving the tube, the sleeve tube being provided with a longitudinal window (6, 106) open facing the openings on one side of the sleeve tube.

2. Fuel cell connection device according to Claim 1, **characterized in that** the connection termination (3, 103) for the first gas is an axial termination of the tube surrounded by the axial electrical connection termination (2, 102).

3. Fuel cell connection device according to Claim 1 or 2, **characterized in that** it comprises an outer connection end fitting (107) connected to the tube serving as electrical and fluidic connector inserted into the sleeve tube (5, 105) and protruding from the sleeve tube.

4. Connection device according to Claim 3, **characterized in that** it constitutes a central connection device (110) for the fuel cell and comprises a cap (108) forming, with the sleeve tube (105), a winding mandrel for the fuel cell.

5. Connection device according to Claim 4, **characterized in that** it constitutes a peripheral connection device (10) for the fuel cell and comprises a cap (8) forming, with the sleeve tube (5), a bearing strip termination element.

6. Fuel cell with spiral-wound cell-bearing strip, for which the cells arranged on the bearing strip are linked in series by wraps (50) forming gas diffusion layers and electrical links between anodes and cathodes of the successive cells, the bearing strip being covered with a cover (51) provided with longitudinal channels (55) for the passage of the first gas and comprising at least one connection device according to Claim 1, 2 or 3, **characterized in that** the tube (1, 101) of said at least one connection device is electrically linked to an end (50a, 50b) of a terminal wrap and **in that** the openings (4, 104) are connected with the longitudinal channels through the window (6, 106) of the sleeve tube (5, 105).

7. Fuel cell with spiral-wound cell-bearing strip according to Claim 6, **characterized in that** the end (50a) of the terminal wrap is inserted between the tube (101) and the sleeve tube (105), the sleeve tube pressing the end of the wrap onto the tube to produce an electrical continuity between the tube and the wrap.

8. Fuel cell with spiral-wound cell-bearing strip according to Claim 7, **characterized in that** the connection device further comprises a cap (108) pressed onto the sleeve tube (105) and securing, between the sleeve tube and the cap, an end (60a) of the bearing strip (60) protruding from the end of the cover (51).

9. Fuel cell with spiral-wound cell-bearing strip according to Claim 8, **characterized in that** the cap (108) covers the window (106) and keeps the cover (51) bearing on the sleeve tube, the longitudinal channels (55) being thus kept facing the window and connected with the openings of the tube.

10. Fuel cell with spiral-wound cell-bearing strip according to Claim 9, **characterized in that** said device is a device (100) central to the spiral for which the spiral is wound around the sleeve tube (105) and the cap (108) configured as a mandrel.

11. Fuel cell with spiral-wound cell-bearing strip according to Claim 6, **characterized in that** the sleeve tube (5) comprises a longitudinal cutout (9) on a side of the sleeve tube opposite the side bearing the window, said cutout allowing a part of the outer face of the tube (1) to protrude producing an electrical connection surface (1a) between the tube and the terminal wrap (50b).

12. Fuel cell with spiral-wound cell-bearing strip according to Claim 11, **characterized in that** the sleeve tube is pressed onto the bearing strip (60) provided with at least one cutout (61) for connecting the channels (55) of the cover (51) with the window (6) of the sleeve tube.

13. Fuel cell with spiral-wound cell-bearing strip according to Claim 11 or 12, **characterized in that** the connection device further comprises a cap (8) pressed onto the sleeve tube (5) and securing, between the sleeve tube (5) and the cap (8), said terminal wrap (50b) and pressing said terminal wrap against the connection surface (1a).

14. Fuel cell with spiral-wound cell-bearing strip according to Claim 13, **characterized in that** the cap (8) is configured as a winding guide for a terminal outer turn (51a) of the cover (51).

15. Fuel cell with spiral-wound cell-bearing strip according to Claim 13 or 14, **characterized in that** the cap (8) and the sleeve tube (5) comprise complementary snap-fitting forms (81, 56), and comprise a concave bottom face pressed onto the outside of the winding of the fuel cell.

16. Fuel cell with spiral-wound cell-bearing strip according to any one of Claims 8 to 10, 13 or 14, **characterized in that** it comprises a winding of a strap (70) with transverse splines (71) forming passages for a second gas at right angles to the winding of the cell, said winding being stopped under the cap and against the sleeve tube.
